Europäisches Patentamt

European Patent Office

Office européen des brevets

(11) Veröffentlichungsnummer: **0 061 021**
A2

(12) # EUROPÄISCHE PATENTANMELDUNG

(21) Anmeldenummer: 82101520.3

(51) Int. Cl.³: **G 01 N 21/90**

(22) Anmeldetag: 27.02.82

(30) Priorität: 21.03.81 DE 3111194

(43) Veröffentlichungstag der Anmeldung:
29.09.82 Patentblatt 82/39

(84) Benannte Vertragsstaaten:
AT BE CH DE FR GB IT LI LU NL SE

(71) Anmelder: HERMANN HEYE
Allee
D-3063 Obernkirchen(DE)

(72) Erfinder: Fischer, Knut
Bergmannsweg 20
D-3262 Auetal 5(DE)

(74) Vertreter: Kosel, Peter, Dipl.-Ing. et al,
Patentanwälte Dipl.-Ing. Horst Röse Dipl.-Ing. Peter
Kosel Postfach 129
D-3353 Bad Gandersheim(DE)

(54) Verfahren und Vorrichtung zur Feststellung von Fehlern von Glasgegenständen.

(57) Verfahren und Vorrichtung zur Feststellung von Fehlern von Glasgegenständen.

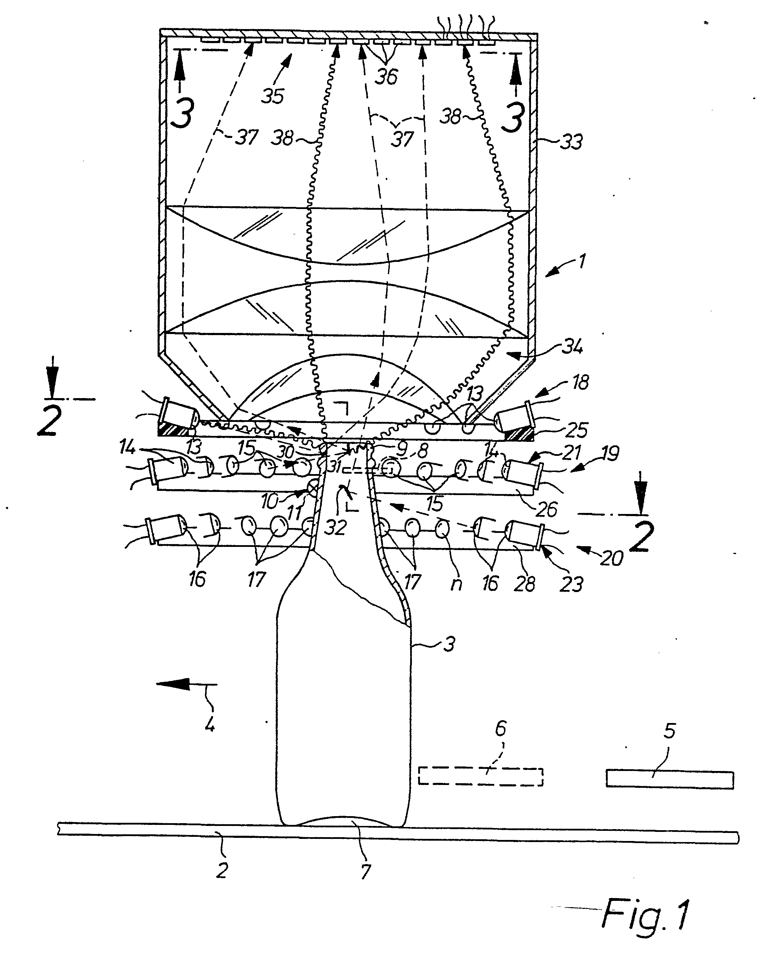

Durch einen Multiplexer (52) nacheinander ansteuerbare Blitzlampen (13 bis 17, n) sind oberhalb und/oder neben der Bewegungsbahn von Mustergegenständen (39) für einen Abgleich einer Signalauswerteschaltung (62) und Prüflingen (3) für den Prüfbetrieb angeordnet und zu Gruppen (18, 19, 20) auf unterschiedliche Prüfzonen der sich kontinuierlich bewegenden Glasgegenstände eingestellt. Von den Glasgegenständen reflektiertes Blitzlicht wird durch eine Abbildungsoptik (34) auf mehrere Empfangselement (36) projiziert, deren jeweils ein Auswertekanal (64) mit einem Schieberegister (74) nachgeschaltet ist. Die Anzahl der Speicherstellen (103) jedes Schieberegisters (74) ist gleich der Anzahl der Ausgänge (I, II, III, ...., n) des Multiplexers (52). Die Schieberegister werden während des Abgleichbetriebs mit von tolerierbaren Fehlern der Mustergegenstände (39) gewonnenen Mustersignalen gesetzt. Der Speicherinhalt wird im Prüfbetrieb stellenweise mit aus Fehlern der Prüflinge (3) gewonnenen Prüfsignalen verglichen zur Feststellung von Fehlersignalen, die auf nicht tolerierbare Fehler zurückgehen. Die Fehlersignale werden unbewertet oder bewertet zur Steuerung eines Auswerfers (83) benutzt. (Fig. 1.)

Fig. 1

**DIPL.-ING. HORST RÖSE**     **DIPL.-ING. PETER KÖSEL**

**PATENTANWÄLTE**

0061021

Unsere Akten-Nr.: 954/150EP   Bad Gandersheim, 26.Febr.1982
01 HERMANN HEYE

### Verfahren und Vorrichtung zur Feststellung von Fehlern von Glasgegenständen.

Die Erfindung betrifft ein Verfahren zur Feststellung von nicht tolerierbaren Fehlern, z.B. Rissen und Blasen, von sich entlang einer Bahn bewegenden Glasgegenständen (Prüflingen), mit folgenden Schritten:

a) Ein Prüfling wird durch Blitzlampen beleuchtet,

b) von dem Prüfling reflektierte Lichtstrahlen werden von einem Empfänger aufgenommen und in elektrische Prüfsignale umgewandelt,

c) die elektrischen Prüfsignale werden mit aus wenigstens einem tolerierbare Fehler aufweisenden Mustergegenstand gewonnenen elektrischen Mustersignalen verglichen, und die durch nicht tolerierbare Fehler hervorgerufenen elektrischen Prüfsignale werden als Fehlersignale festgestellt, und

d) die Fehlersignale werden zur Betätigung eines Auswerfers für nicht tolerierbare Fehler aufweisende Prüflinge benutzt.

Bei einem bekannten Verfahren dieser Art (DE-Offenlegungsschrift 29 16 361) sind als Blitzlampen Lumineszenzdioden kreisringförmig um einen Tubus herum und koaxial mit dem in einer Meßposition befindlichen Prüfling angeordnet. In jedem Prüfvorgang werden alle Blitzlampen gleichzeitig und nur einmal angesteuert. Das Blitzlicht tritt durch eine außen an dem Tubus anliegende ringförmige Streuscheibe und fällt zum Teil auf die oberste Fläche einer Mündung des Prüflings, von wo ein Teil in das Innere des Tubus reflektiert und durch eine am oberen Ende des Tubus anschließende, nach dem Zeilenrasterverfahren arbeitende Fernsehkamera aufgenommen wird. Auf einer lichtempfindlichen Schicht der Aufnahmeröhre der Fernsehkamera wird dadurch ein der obersten Mündungsfläche entsprechendes Ladungsbild erzeugt, gespeichert und später in einer Auswerteschaltung ausgewertet. Bis dahin muß der Abtaststrahl der Aufnahmeröhre gesperrt werden, um ein vorzeitiges Löschen des Ladungsbildes zu verhindern. Aus beim zeilenweisen Abtasten des Ladungsbildes entstehenden Impulspaaren werden Sehnenlängensignale gebildet und mit Sollwerten verglichen. Bei Abweichung um mehr als einen vorgegebenen Betrag wird ein Fehlersignal abgegeben und zur Betätigung des Auswerfers verwendet. Mit diesem bekannten Verfahren lassen sich nur Beschädigungen, z.B. Deformationen, der obersten Mündungsfläche des Prüflings, also Formabweichungen von seiner äußeren Sollkontur, feststellen. Wegen des in jedem Prüfvorgang gleichzeitigen Aufleuchtens aller Blitzlampen ist das Nutzsignal/Störsignal-Verhältnis zum Auffinden anderer Fehler als Formabweichungen, z.B. von waagerechten Rissen, ungünstig. Das Ladungsbild wird in einem verhältnismäßig lange Zeit beanspruchenden Abtastvorgang seriell abgetastet. Das Nachleuchten oder "Nachziehen" der lichtempfindlichen Schicht der Aufnahmeröhre senkt die erreichbare Bildfolgefrequenz in ungünstiger Weise. Aus zeitlichen Gründen wird es schwer oder gar unmöglich sein, in einem Prüfvorgang mehrere Prüfzyklen an demselben Prüfling vorzunehmen.

Der Erfindung liegt die Aufgabe zugrunde, außer Abweichungen von der Sollkontur weitere Fehlertypen, insbesondere Risse und Blasen, innerhalb der Sollkontur des Prüflings festzustellen. Das Nutzsignal/Störsignal-Verhältnis soll verbessert werden. Die erreichbare Bildfolgefrequenz soll erhöht werden. Die Kosten für Herstellung und Reparatur sollen gesenkt werden. Die Re-

0061021

paratur soll auch weniger geschultem Stammpersonal im rauhen Betrieb einer Glashütte möglich sein.

Diese Aufgabe ist durch die im Kennzeichnungsteil des Anspruchs 1 aufgeführten Merkmale gelöst. Durch die nacheinander erfolgende Ansteuerung der Blitzlampen in jedem Abgleichzyklus und in jedem Prüfzyklus wird das Nutzsignal/Störsignal-Verhältnis erheblich verbessert. Da die festzustellenden Fehler in der Regel nur von wenigen Blitzlampen zur Aufnahme durch die Empfangselemente optimal beleuchtet werden können, bietet die nacheinander erfolgende Ansteuerung der Blitzlampen eine Verbesserung der Fehlererkennung, weil im Augenblick der Aufnahme von Fehlersignalen nicht das Streulicht von im Augenblick nicht erforderlichen Blitzlampen vorhanden sein wird. Vorzugsweise ist den mehreren und einzeln nacheinander anzusteuernden Blitzlampen jeweils eine Stelle in den den Empfangselementen nachgeschalteten elektronischen Speichern zugeordnet. Der Speicher enthält dadurch am Ende jedes Abgleichzyklus ein in der erforderlichen Weise fein differenziertes digitales Abbild des Qualitätszustands des gerade optisch abgetasteten Mustergegenstands. Am Ende des Abgleichbetriebs wird auf den Prüfbetrieb umgeschaltet, so daß die von diesem Zeitpunkt an durchlaufenden Prüflinge in der gleichen Weise wie die Mustergegenstände optisch abgetastet und das digitale Ergebnis aller Empfangselemente parallel mit den entsprechenden Stellen der elektronischen Speicher verglichen und zur Feststellung der Fehlersignale ausgewertet werden kann. Diese parallele Verarbeitung der Daten ist im Vergleich zu der bekannten seriellen Verarbeitung sehr schnell, so daß sich bei der parallelen Verarbeitung eine schnellere Aufnahmefolge, d.h. Abgleichzyklen- oder Prüfzyklenfolge, ergibt. Der parallele Betrieb führt durch die Wiederkehr vieler gleicher aber einfacher Schaltungselemente zu leicht und kostengünstig herzustellenden und zu reparierenden Einheiten, die auch durch weniger geschultes Personal in der Glashütte schnell verstanden und sicher repariert werden können. Vorzugsweise werden die Mustergegenstände und die Prüflinge auf einer geraden Bahn, z.B. auf einer Transportkette, bewegt. Als Blitzlampen können z.B. Lumineszenzdioden verwendet werden. Die Blitzlampen können im sichtbaren oder unsichtbaren Bereich des Spektrums betrieben werden. Die Mustergegenstände und Prüflinge können während des Abgleichs oder der Prüfung vorzugsweise kontinuierlich bewegt werden, denn die Blitzlampen werden mit so hoher Geschwindigkeit nacheinander angesteuert, daß sich der Mustergegenstand während des Abgleichzyklus und der Prüfling während des Prüfzyklus praktisch in Ruhe befinden. Die Mustergegenstände und die Prüflinge brauchen während des Abgleichs und der Prüfung nicht relativ zu ihrem Träger in Drehung um die eigene Längsachse versetzt zu werden. Trotz dieser fehlenden Eigenrotation der Mustergegenstände und Prüflinge gelingt es mit der aufeinanderfolgenden Ansteuerung der Blitzlampen, in jedem Abgleichzyklus oder Prüfzyklus den gesamten Umfang des Mustergegenstands oder des Prüflings zu beleuchten und damit optisch - elektronisch in seinem Qualitätszustand zu erfassen; dazu sind die Blitzlampen in geeigneter Weise stationär angeordnet und auf den Mustergegenstand oder Prüfling ausgerichtet.

Die Erfindung betrifft auch eine Vorrichtung zur Durchführung des zuvor erwähnten Verfahrens und ist durch die im Anspruch 2 angegebenen Merkmale gekennzeichnet. Bei den Prüfzonen kann es sich z.B. um waagerechte Ringe des Mustergegenstands oder des Prüflings handeln. So lassen sich in einem einzigen Prüfzyklus nicht tolerierbare Fehler des Prüflings nicht nur in einer sondern in mehreren Prüfzonen ermitteln. Diese Prüfzonen können z.B. im Bereich der Mündung eines Hohlglasgegenstands oder im Bereich seines Halsansatzes liegen. Grundsätzlich wird man bei jedem Prüflingstyp diejenigen Zonen kennen, in denen bevorzugt nicht tolerierbare Fehler auftreten können. Es gelingt mit der Erfindung, sich durch passende Anordnung der Blitzlampen schnell und sicher auf dieses Phänomen einzustellen. In dem Abgleichvorgang wird der Prüfvorrichtung wenigstens ein Mustergegenstand mit tolerierbaren Fehlern angeboten. Die bei der optischen Abtastung des ersten Mustergegenstands gesetzten Stellen der elektronischen Speicher bleiben in dem gesetzten Zustand, selbst wenn in einem weiteren Abgleichzyklus mit demselben Mustergegenstand oder bei der Abtastung eines nachfolgenden Mustergegenstands diese schon gesetzten Speicherstellen wiederum einen Setzimpuls erhalten sollten. Am Ende des Abgleichbetriebs sind schließlich alle Speicherstellen gesetzt, deren eine oder mehrere zugeordnete Blitzlampen während des gesamten Abgleichbetriebs jemals durch die Mustergegenstände reflektiertes Licht auf das zu dem betreffenden Speicher gehörende Empfangselement gesandt haben. Am Ende des Abgleichbetriebs wird, z.B. von Hand, der erste Wahlschalter betätigt und damit vom Abgleichbetrieb auf den Prüfbetrieb umgeschaltet.

Während des Prüfbetriebs bleibt der Inhalt aller elektronischen Speicher unverändert und dient als Bezugsinformation für den während des jeweiligen Prüfvorgangs erfolgenden parallelen stellenweisen Vergleich der Prüfsignale mit den Mustersignalen. Stellt sich bei diesem Vergleich heraus, daß in einer Stelle ein Prüfsignal vorliegt, an der der zugehörige elektronische Speicher ein Mustersignal nicht aufweist, stellt dieses Prüfsignal ein Fehlersignal dar.

Anspruch 3 führt zu einer verhältnismäßig einfachen Anordnung, in der die Blitzlampen zumindest annähernd gleichen Abstand von dem Mustergegenstand oder Prüfling haben können.

Mit Anspruch 4 gelingt es, auch unterhalb der Mündung des Glasgegenstands Prüfzonen einzurichten und nicht tolerierbare Fehler festzustellen. Eine solche Anordnung wird auch zum Nachweis senkrechter Risse eingesetzt.

Die Laserdioden gemäß Anspruch 5 sind zweckmäßigerweise auf die in der Bewegungsrichtung des Glasgegenstands vordersten und hintersten Bereiche der jeweiligen Prüfzone ausgerichtet, so daß der verhältnismäßig große Abstand dieser Dioden von dem Glasgegenstand dank der guten Bündelung des von den Laserdioden ausgesandten Blitzlichts die Qualität der Prüfung nicht mindert.

Die Anordnung gemäß Anspruch 6 ist einfach und übersichtlich. Man hat guten Zugriff zu den einzelnen Blitzlampen.

Die Anordnung gemäß Anspruch 7 ist besonders wirtschaftlich und erleichtert den Zugriff zu den einzelnen Blitzlampen bei Montage und Austausch.

Die Anordnung gemäß Anspruch 8 ist besonders kompakt. Die Meßstrecke stellt den Laufweg des Mustergegenstands und des Prüflings während des einen oder der mehreren Abgleich- und Prüfzyklen des Abgleichvorgangs und des Prüfvorgangs dar.

Mit den Merkmalen des Anspruchs 9 wird eine beliebig genaue Querzentrierung der Mustergegenstände und Prüflinge auf dem Transportelement, z.B. der Transportkette, erreicht. Die Längszentrierung ergibt sich selbsttätig durch das Wandern der Mustergegenstände und Prüflinge mit der Transportkette und wird durch eine später zu behandelnde Startlichtschranke gemeldet.

Mit Anspruch 10 läßt sich bei Bedarf eine Feinzentrierung der Glasgegenstände in der Querrichtung erreichen. Dies kann z.B. bei der Prüfung der Mündung von Hohlglasgegenständen wünschenswert sein.

Durch Anspruch 11 sind günstige Empfangsverhältnisse sowie einfacher Aufbau des Empfängers gegeben.

Die besonderen Anordnungen der Empfangselemente gemäß den Ansprüchen 12 bis 14 wählt man je nach den Besonderheiten der zu prüfenden Glasgegenstände. Geeignete Kombinationen bestimmter Gruppen der Empfangselemente können in später zu erläuternder Weise bei der Abfrage nach aufgenommenen Lichtsignalen zur Wahl des günstigsten Prinzips einer Bewertung der Fehlersignale durch unterschiedliche logische Verknüpfung zur Ausschußentscheidung herangezogen werden. Jede Fehlerart erzeugt nämlich eine typische, meist gleichzeitig mehrere Empfangselemente beleuchtende Blitzlichtreflexerscheinung, so daß sich durch eine solche Bewertung zuverlässig und flexibel tolerierbare von nicht tolerierbaren Fehlern trennen lassen.

Die Abbildungsoptik gemäß Anspruch 15 dient dem Ziel, die vielfältigen vom Mustergegenstand und Prüfling aus divergenten Fehlerreflexe mit großem Raumwinkel zu erfassen. Die Abbildungsoptik kann für unterschiedliche Typen der zu prüfenden Glasgegenstände unterschiedlich ausgelegt und austauschbar sein.

Die Startlichtschranke nach Anspruch 16 meldet die Längszentrierung des zu prüfenden Glasgegenstands und leitet den Abgleichvorgang oder Prüfvorgang ein. Bei Anordnung der Startlichtschranke im Bereich einer verhältnismäßig geringen Querdimension des Glasgegenstands ist es im Grenzfall zulässig, daß aufeinanderfolgende Mustergegenstände oder Prüflinge sich berühren.

Die Schaltung gemäß Anspruch 17 liefert während des Abgleichzyklus und während des Prüfzyklus die gewünschte Taktfrequenz und sorgt für die genaue Einhaltung der Zykluslänge.

Das Schieberegister gemäß Anspruch 18 kann mit einfachen Mitteln die dem elektronischen Speicher zugewiesenen Aufgaben erfüllen. Es speichert die Mustersignale während des Abgleichbetriebs und hält diese Stelle nach Stelle für den im Prüfvorgang folgenden Vergleich mit den Prüfsignalen bereit.

Die Schaltung gemäß Anspruch 19 bietet die Möglichkeit der gleichzeitigen Löschung aller elektronischen Speicher.

Mit der Schaltung gemäß Anspruch 20 läßt sich auf einfache Weise die Anzahl der Abgleichzyklen je Abgleichvorgang und die Anzahl der Prüfzyklen je Prüfvorgang festlegen. Je nach der Größe der Toleranzen in den Abmessungen der Mustergegenstände und Prüflinge und damit auch Toleranz der Meßposition kann es ratsam sein, in jedem Abgleich- oder Prüfvorgang mehrere, z.B. zwei bis drei, Abgleich- oder Prüfzyklen schnell nacheinander durchzuführen.

Die Schaltung gemäß Anspruch 21 gestattet es, sämtliche durch die Empfangselemente ausgesandten Mustersignale und Prüfsignale durch die z.B. roten Signallampen anzuzeigen. Die Anzeige bleibt jeweils bis zum Beginn des nächsten Zyklus erhalten.

Die Schaltung gemäß Anspruch 22 ermöglicht während jedes Prüfvorgangs die Anzeige jedes Fehlersignals mit den z.B. grünen Signallampen.

Durch Anspruch 23 wird während des Abgleichens die visuelle Überwachung der Prüfmaschine durch das Wartungspersonal, insbesondere das Feststellen der räumlichen Lage und Struktur der Blitzlichtreflexerscheinung von Fehlern, erleichtert.

Die Schaltung gemäß Anspruch 24 gewährleistet, daß der Auswerfer nur während des Prüfbetriebs, nicht jedoch auch während des Abgleichbetriebs, betätigt wird. Dies bewahrt vor unbeabsichtigtem Verlust von Mustergegenständen.

Die Schaltung gemäß Anspruch 25 sorgt dafür, daß der Auswerfer ggf. erst am Ende des Prüfvorgangs betätigt wird.

Die Schaltung gemäß Anspruch 26 bewertet die Fehlersignale insofern, als nicht jedes Fehlersignal zur Betätigung des Auswerfers führt, sondern während jedes Prüfvorgangs erst eine durch die Voreinstellung des Vorwahlzählers bestimmte Anzahl von Fehlersignalen.

Der Frühwarnzähler gemäß Anspruch 27 dient der laufenden Qualitätskontrolle. Durch Zählung aller Fehlersignale erleichtert er eine Tendenzanzeige. Der Frühwarnzähler kann als Prozentzähler mit Zahlenanzeige ausgebildet sein.

Die Schaltung gemäß Anspruch 28 dient bei Verwendung mehrerer ersten ODER-Glieder zur Bewertung der Fehlersignale ebenfalls der laufenden Qualitätsüberwachung.

Die Schaltung gemäß Anspruch 29 führt ebenfalls zu einer Bewertung der in einem Prüfvorgang festgestellten Fehlersignale einerseits durch die siebenten UND-Glieder und andererseits durch die Voreinstellung des Vorwahlzählers auf einen Wert größer als Eins.

Die Schaltung gemäß Anspruch 30 gestattet die gesonderte Berücksichtigung besonderer Gruppen der Empfangselemente bei der Aus- und Bewertung der Fehlersignale.

Der Ausschußzähler gemäß Anspruch 31 dient der laufenden Fertigungs- und Qualitätsüberwachung.

Die Erfindung wird nachfolgend anhand der in den Zeichnungen dargestellten Ausführungsbeispiele näher erläutert. Es zeigen:

Fig. 1 einen teilweisen Längsschnitt durch eine Prüfvorrichtung gemäß Linie 1-1 in Fig. 2,

Fig. 2 die teilweise geschnittene Ansicht gemäß Linie 2-2 in Fig. 1,

Fig. 3 die Ansicht gemäß Linie 3-3 in Fig. 1 auf einen Empfänger,

Fig. 4 und 5 jeweils eine der Fig. 3 entsprechende Ansicht auf einen anderen Empfänger,

Fig. 6 eine Taktgeneratorschaltung der Prüfvorrichtung,

Fig. 7 eine modifizierte Taktgeneratorschaltung,

Fig. 8 eine Stromversorgungsschaltung,

Fig. 9 eine Schaltung zum Ansteuern von Blitzlampen der Prüfvorrichtung,

Fig. 10 als Blockdiagramm den Empfänger und eine Signalauswerteschaltung,

Fig. 11 einen modifizierten Teil der Schaltung gemäß Fig. 10,

Fig. 12 Einzelheiten eines in Fig. 10 verwendeten Schieberegisters,

Fig. 13 eine Fig. 3 entsprechende Signallampenmatrix,

Fig. 14 einen modifizierten Teil der Schaltung gemäß Fig. 10 und

Fig. 15 einen anders modifizierten Teil der Schaltung gemäß Fig. 10.

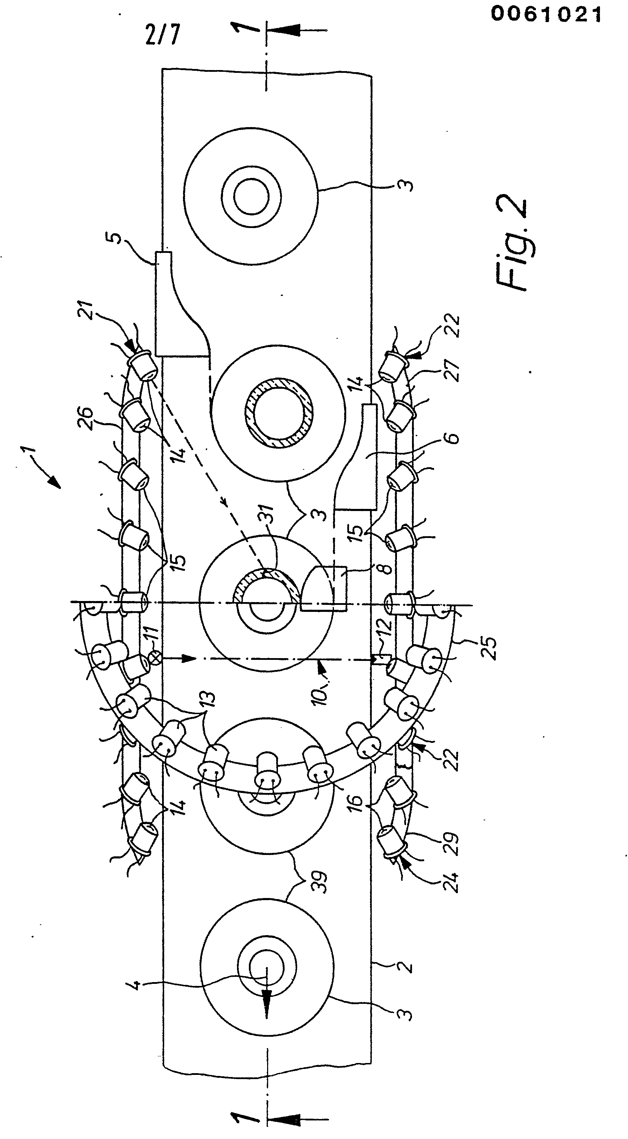

Fig. 1 zeigt einen Teil einer Prüfvorrichtung 1, an der auf einer Transportkette 2 Glasgegenstände, in diesem Fall Flaschen, als Prüflinge 3 in einer Bewegungsrichtung 4 vorbeigeführt werden. Die Prüflinge 3 bewegen sich linear, kontinuierlich und ohne Eigendrehung um ihre Längsachse. Zu beiden Seiten der Bewegungsbahn der Prüflinge 3 ist je eine Zentrierschiene 5 und 6 in der Bewegungsrichtung 4 gegeneinander versetzt im Bereich eines Bodens 7 des Prüflings 3 angeordnet. Die Zentrierschiene 6 ist in Fig. 1 gestrichelt eingetragen, weil sie oberhalb der Zeichenebene liegt, wie Fig. 2 verdeutlicht.

Die Zentrierschienen 5, 6 nehmen gemäß Fig. 2 eine grobe Querzentrierung des Prüflings 3 vor, während zur Feinzentrierung insbesondere einer Mündung 9 des Prüflings 3 in der Querrichtung eine in Fig. 1 ebenfalls oberhalb der Zeichenebene liegende und daher gestrichelt eingetragene Feinzentrierschiene 8 im Bereich der Mündung 9 des Prüflings 3 dient.

In Fig. 1 befindet sich der Prüfling gerade am Anfang einer - verhältnismäßig kurzen - Meßstrecke, weil er in diesem Augenblick eine raumfest angeordnete Lichtschranke 10 dunkeltastet, deren Lichtquelle 11 in Fig. 1 zu sehen ist.

Sobald ein Empfänger 12 der Lichtschranke 10 dunkelgetastet ist, werden mittels der später im einzelnen zu beschreibenden Schaltungen Blitzlampen 13 bis 17, n einzeln oder zu mehreren nacheinander angesteuert.

Eine Gruppe 18 der Blitzlampen 13 ist oberhalb der Bewegungsbahn der Prüflinge 3 kreisringförmig in einer Reihe angeordnet. Zwei weitere Gruppen 19 und 20 der Blitzlampen 14, 15 und 16, 17, n weisen jeweils zwei auf gegenüberliegenden Seiten neben der Bewegungsbahn der Prüflinge 3 jeweils in einer Reihe angeordnete Halbgruppen 21, 22 und 23, 24 auf.

Die Blitzlampen 13, 15, 17, n sind als Lumineszenzdioden
und die Blitzlampen 14, 16 als Laserdioden ausgebildet.
Die Blitzlampen 13 sind an einem Haltering 25 und die
Halbgruppen 19 bis 24 jeweils an einer Halteschiene 26
bis 29 (siehe auch Fig. 2) befestigt.

In Fig. 1 zeigt die Mündung 9 als typische Fehler einen
etwa waagerechten Riß 30 und einen etwa senkrechten Riß
31. Kurz unterhalb der Mündung 9 ist ferner ein Riß 32
zu sehen. Diese drei unterschiedlichen Rißtypen liegen
jeweils im wesentlichen in einer zu der Transportkette 2
parallelen Prüfzone. Die Gruppe 18 der Blitzlampen 13 ist
gemäß Fig. 1 auf die den waagerechten Riß enthaltende
Prüfzone ausgerichtet. In ähnlicher Weise sind die Halbgruppen 21, 22 auf die den Riß 31 enthaltende Prüfzone
ausgerichtet und sind die Blitzlampen der Halbgruppen 23,
24 auf die den Riß 32 enthaltende Prüfzone des Prüflings
3 ausgerichtet.

Von dem Prüfling 3 reflektierte Lichtstrahlen werden von
einer in einem Tubus 33 gefaßten Abbildungsoptik 34 auf
einen Empfänger 35 mit einer Anzahl von Empfangselementen
36 projiziert. Fig. 1 zeigt einige gestrichelt eingetragene Nutzreflexe 37 und einige gewellt eingetragene
Störreflexe 38.

Dem eigentlichen Prüfbetrieb geht ein Abgleichbetrieb
voraus, bei dem nicht die Prüflinge 3 sondern in Fig. 2
noch erkennbare, in diesem Fall ebenfalls Flaschen darstellende Mustergegenstände 39 auf der Transportkette 2
durch die Prüfvorrichtung 1 laufen. Bei den Mustergegenständen 39 handelt es sich um Glasgegenstände des gleichen
Typs wie die Prüflinge 3. Jedoch weisen die Mustergegenstände 39 tolerierbare Fehler auf, die in der gleichen Weise wie später die Prüflinge 3 nacheinander durch die Blitzlampen beleuchtet werden. Der Abgleich kann z.B. nach Durchlauf von zehn Mustergegenständen 39 abgeschlossen sein. Danach wird in später zu beschreibender Weise von dem Abgleichbetrieb auf den Prüfbetrieb umgeschaltet, so daß dann die Prüflinge 3 auf nicht tolerierbare Fehler untersucht werden können. Zur Vereinfachung sind in den Fig. 1 und 2 nur Risse als solche Fehler dargestellt. Es können jedoch auch andere Fehlertypen, wie z.B. Fehler in der Soll-Außenkontur des Prüflings 3 oder Blasen, festgestellt werden.

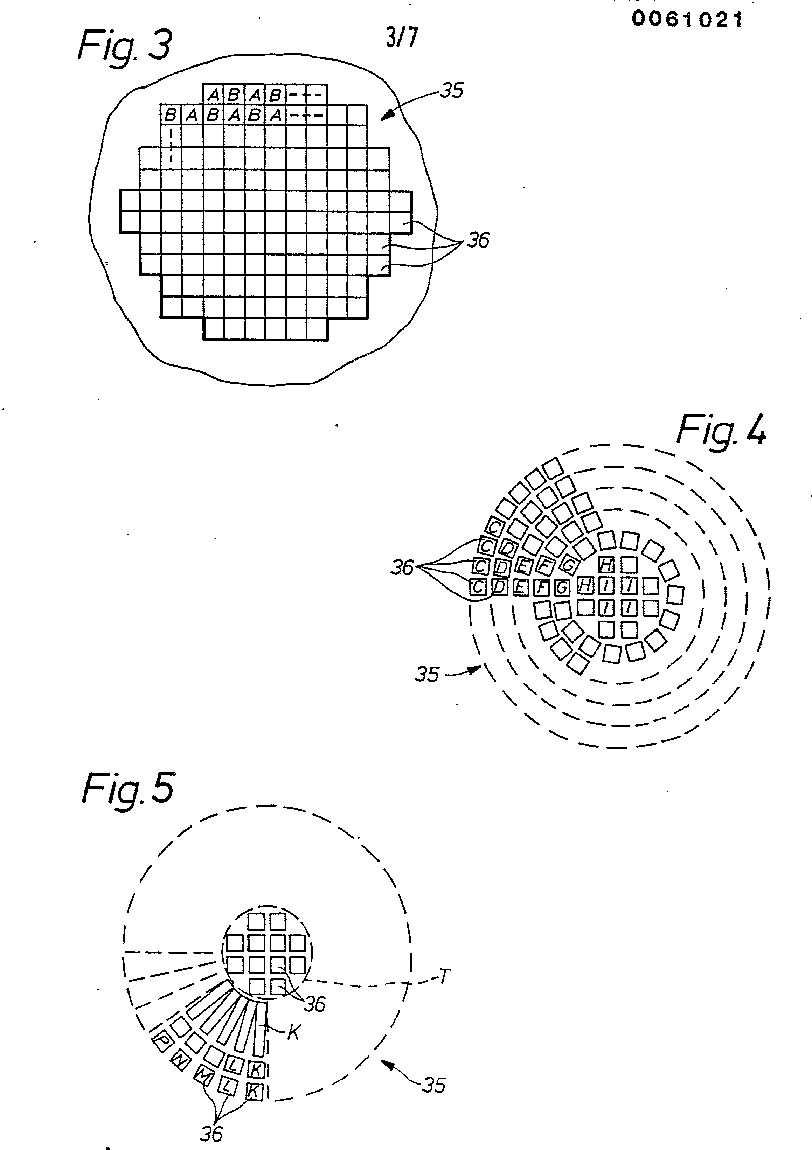

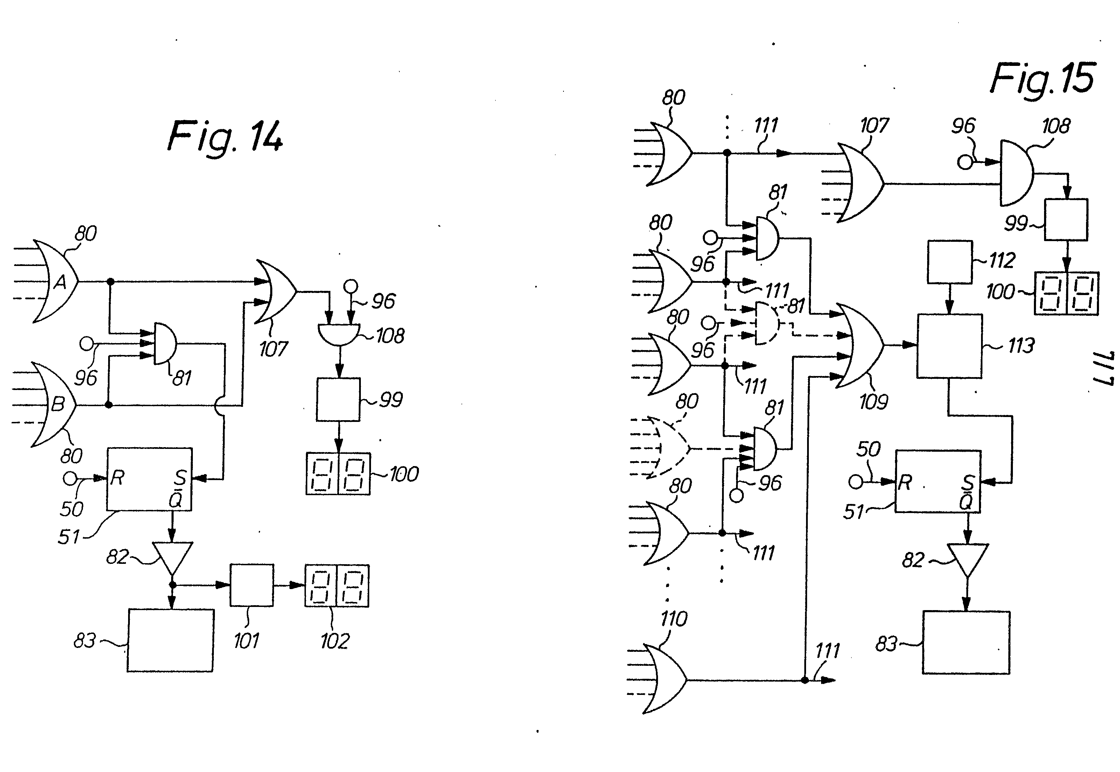

Gemäß Fig. 3 sind die Empfangselemente 36 des Empfängers 35 in einer Matrix aus Zeilen und Spalten angeordnet. Die Empfangselemente 36 sind jeweils wechselweise mit A und B gekennzeichnet für die im Zusammenhang mit Fig.14 zu beschreibende besondere Auswertung der Fehlersignale.

Gemäß Fig. 4 sind die Empfangselemente 36 in konzentrischen Kreisen C bis I angeordnet. Diese Kreise können einer besonderen Auswertung der Fehlersignale gemäß Fig. 15 unterworfen werden.

In Fig. 5 sind die Empfangselemente 36 in Kreissektoren, z.B. K, L, M, N, P, und in einem zentralen, im wesentlichen kreisförmigen Feld T angeordnet. Auch die gemäß Fig. 5 gewonnenen Fehlersignale lassen sich in besonderer Weise nach Fig. 15 auswerten.

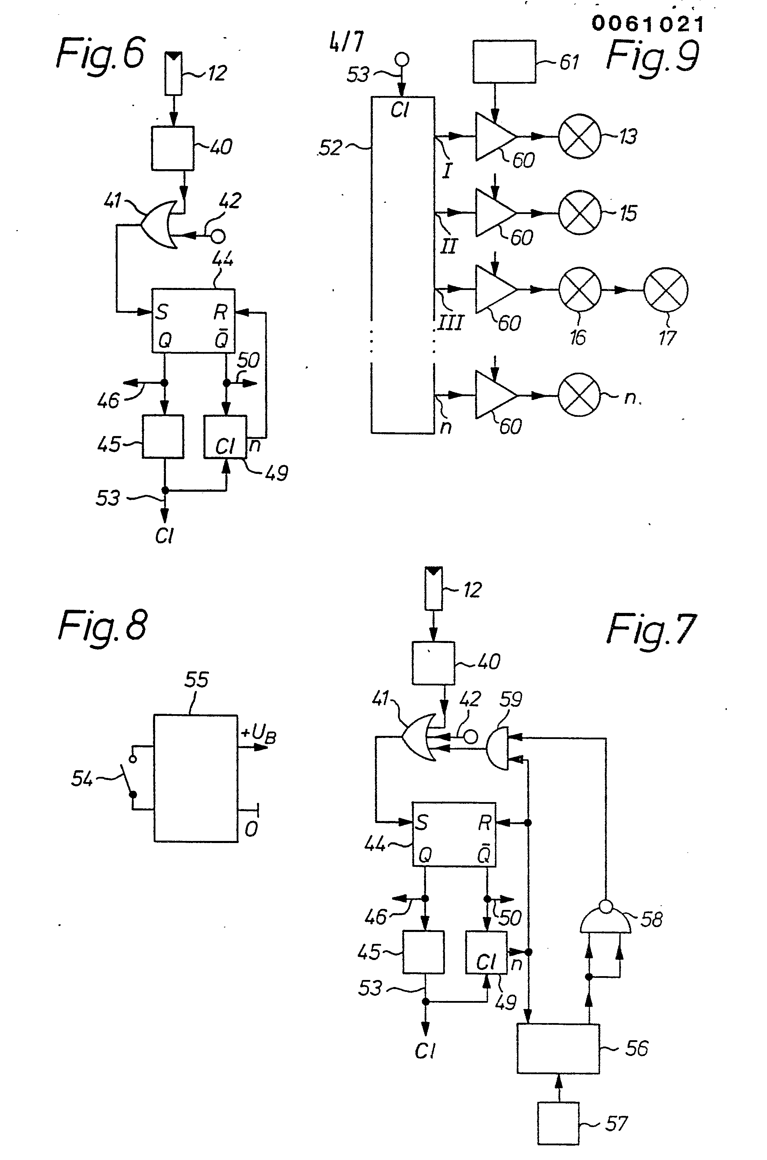

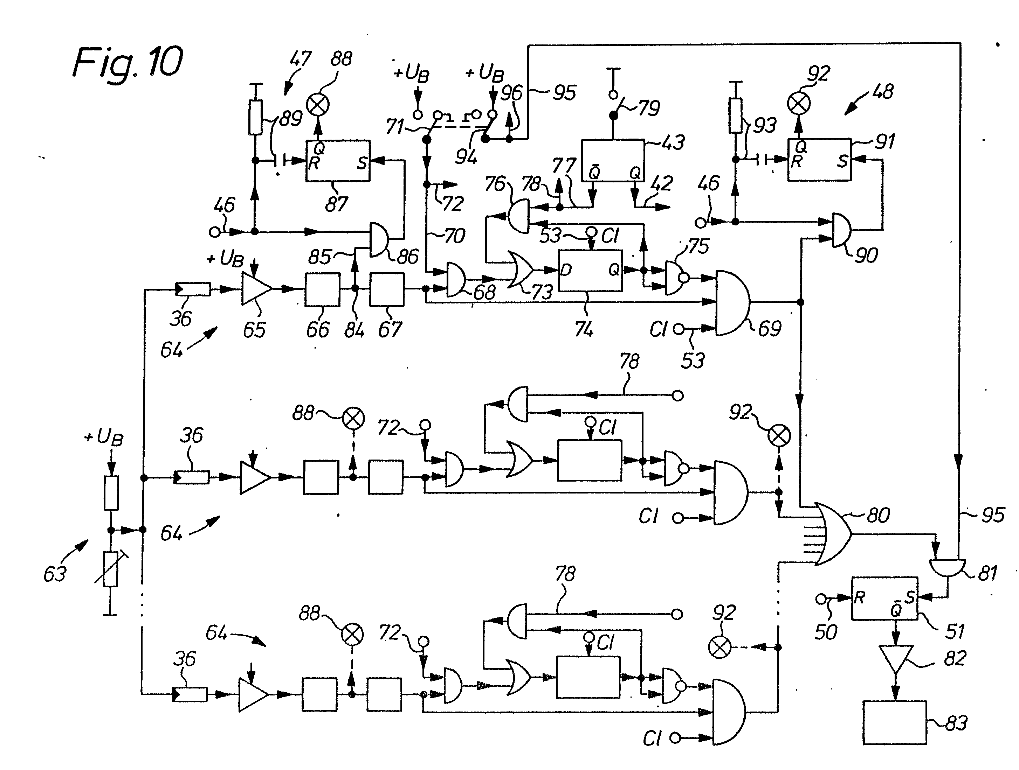

Fig. 6 zeigt eine Taktgeneratorschaltung, die jeweils über den Empfänger 12 der Lichtschranke 10 durch einen der Mustergegenstände 39 oder einen der Prüflinge 3 gestartet wird. Der Empfänger 12 ist über einen Schmitt-Trigger 40 mit einem Eingang eines dritten ODER-Glieds 41 verbunden, dessen anderer Eingang über eine Leitung 42 mit einem Ausgang Q einer monostabilen Kippschaltung 43 (Fig. 10) verbunden ist. Der Ausgang des dritten ODER-Glieds 41 führt zu dem Setzeingang S eines ersten Flipflops 44, dessen Ausgang Q einerseits mit einem z.B. eine Taktfrequenz C1 von 100kHz erzeugenden Taktgenerator 45 und andererseits über eine Leitung 46 mit einer Anzahl von Signallampenschaltungen 47 und 48 (Fig. 10) verbunden ist. Der andere Ausgang $\bar{Q}$ des ersten Flipflops 44 ist einerseits mit dem Eingang eines Zählers 49 und andererseits über eine Leitung 50 mit dem Rücksetzeingang R eines vierten Flipflops 51 (Fig. 10, 11, 14 und 15) verbunden. Der Takteingang C1 des Zählers 49 ist an den Ausgang des Taktgenerators 45 angeschlossen. Der Ausgang des Zählers 49 ist mit dem Rücksetzeingang R des ersten Flipflops 44 verbunden. An dem Ausgang des Zählers 49 erscheint jeweils nach n Taktimpulsen ein Ausgangsignal, wobei n der Anzahl der Ausgänge I, II, III, ..., n eines Multiplexers 52 (Fig. 9) entspricht. Der Ausgang des Taktgenerators 45 speist eine Leitung 53 mit der Taktfrequenz C1.

Die Stromversorgungsschaltung gemäß Fig. 8 weist eine durch einen Hauptschalter 54 betätigbare zentrale Stromversorgungsschaltung 55 auf, an deren Klemmen einerseits Nullpotential 0 und andererseits ein positives Potential $+U_B$ anstehen.

Fig. 7 bringt eine Abwandlung der Taktgeneratorschaltung gemäß Fig. 6. Der Ausgang des Zählers 49 ist in Fig. 7 auch mit einem Eingang eines ersten Vorwahlzählers 56 verbunden, der über einen zweiten Wahlschalter 57 voreinstellbar ist. Der Ausgang des ersten Vorwahlzählers 56 ist mit beiden Eingängen eines zweiten Inverters 58 verbunden, dessen Ausgang zu einem Eingang eines vierten UND-Glieds 59 führt. Mit einem weiteren Eingang des vierten UND-Glieds 59 ist der Ausgang des Zählers 49 verbunden. Der Ausgang des vierten UND-Glieds 59 führt zu einem weiteren Eingang des dritten ODER-Glieds 41.

Mit der modifizierten Taktgeneratorschaltung gemäß Fig.7 läßt sich also die Anzahl der Abgleichzyklen in jedem Abgleichvorgang und die Anzahl der Prüfzyklen in jedem Prüfvorgang bestimmen.

Fig. 9 zeigt, daß der Multiplexer 52 über die Leitung 53 an den Taktgenerator 45 angeschlossen ist und daß jeder seiner Ausgänge I, II, III,..., n über einen Verstärker 60 mit einer Blitzlampe 13, 15, n oder, im Falle des Ausgangs III, mit mehreren Blitzlampen, 16, 17 verbunden ist. Die Anzahl der durch jeden Verstärker 60 ansteuerbaren Blitzlampen 13 bis 17, n richtet sich nach den Erfordernissen des praktischen Einsatzfalls. Gleiches gilt grundsätzlich auch für die Reihenfolge, in der die Blitzlampen 13 bis 17, n durch die Ausgänge I, II, III,..., n des Multiplexers 52 angesteuert werden. Man kann z.B. mit dem Multiplexer 52 zunächst alle Blitzlampen 13 (Fig.1 und 2), danach alle Blitzlampen der Gruppe 19 und danach alle Blitzlampen der Gruppe 20 einzeln oder zu mehreren ansteuern. In jedem Fall wird durch jede Gruppe 18,19,20 der Blitzlampen der gesamte Umfang einer jeder Gruppe zugeordneten ringförmigen Prüfzone des Mustergegenstands 39 oder des Prüflings 3 beleuchtet, so daß keine ungeprüften Umfangsbereiche verbleiben. Die Verstärker 60 werden durch eine gemeinsame Stromversorgungsschaltung 61 versorgt. Die Anzahl n der Ausgänge des Multiplexers 52 kann z.B. 128 betragen. Die Gesamtanzahl n der Blitzlampen ist gleich oder größer als die Gesamtanzahl der Ausgänge des Multiplexers 52.

Fig. 10 zeigt eine Signalausworteschaltung 62. Darin werden die Empfangselemente 36 über einen gemeinsamen Spannungsteiler 63 auf ein die Nachweisempfindlichkeit bestimmendes Bezugspotential gesetzt. Jedem Empfangselement 36 folgt ein Auswertekanal 64, die jeweils in gleicher Weise ausgebildet sind.

Jedes Empfangselement 36 ist über einen Vorverstärker 65, einen Schmitt-Trigger 66 und eine monostabile Kippschaltung 67 einerseits mit einem Eingang eines ersten UND-Glieds 68 und andererseits mit einem Eingang eines zweiten UND-Glieds 69 verbunden. Ein weiterer Eingang des ersten UND-Glieds 68 ist über eine Leitung 70 mit einem ersten Wahlschalter 71 verbunden, der für den Abgleich der Signalauswerteschaltung 62 mit dem positiven Potential $+U_B$ und für den Prüfbetrieb mit dem Nullpotential 0 verbindbar ist. Eine Zweigleitung 72 führt von der Leitung 70 jeweils zu dem ersten UND-Glied 68 aller anderen Auswertekanäle 64.

Der Ausgang jedes ersten UND-Glieds 68 führt über ein zweites ODER-Glied 73 zu dem Dateneingang D eines als Schieberegister ausgebildeten elektronischen Speichers 74, der über die Leitung 53 außerdem mit dem Taktgenerator 45 (Fig. 6 und 7) verbunden ist. Der Ausgang Q jedes Speichers 74 ist einerseits mit beiden Eingängen eines ersten Inverters 75 und andererseits mit einem Eingang eines dritten UND-Glieds 76 verbunden, dessen Ausgang mit einem weiteren Eingang des zweiten ODER-Glieds 73 verbunden ist. Ein weiterer Eingang des dritten UND-Glieds 76 ist über eine Leitung 77 mit einem Ausgang $\bar{Q}$ der monostabilen Kippschaltung 43 verbunden. Von der Leitung 77 führt eine Zweigleitung 78 jeweils an einen Eingang des dritten UND-Glieds 76 aller übrigen Auswertekanäle 64. Die monostabile Kippschaltung 43 wird bei Bedarf durch einen Löschtastschalter 79 betätigt, dessen Schließen zum parallelen Löschen aller Speicher 74 führt.

Der Ausgang des ersten Inverters 75 ist mit einem Eingang des zweiten UND-Glieds 69 verbunden. Der Ausgang der zweiten UND-Glieder 69 ist jeweils mit einem Eingang eines ersten ODER-Glieds 80 verbunden, dessen Ausgang über ein siebentes UND-Glied 81 zu dem Setzeingang S des vierten Flipflops 51 führt. Ein Ausgang Q̄ des vierten Flipflops 51 ist über einen Endverstärker 82 zu einem Auswerfer 83 geführt.

Von einem Punkt 84 zwischen dem Schmitt-Trigger 66 und der monostabilen Kippschaltung 67 führt jeweils eine Leitung 85 der Signallampenschaltung 47 über ein fünftes UND-Glied 86 an den Setzeingang S eines zweiten Flipflops 87, dessen Ausgang Q mit einer z.B. roten Signallampe 88 verbunden ist. Die Leitung 46 ist einerseits mit einem weiteren Eingang des fünften UND-Glieds 86 und andererseits über ein erstes RC-Glied 89 mit dem Rücksetzeingang R des zweiten Flipflops 87 verbunden.

Die Signallampenschaltungen 48 sind in der gleichen Weise wie die Signallampenschaltungen 47 aufgebaut. So führt der Ausgang jedes zweiten UND-Glieds 69 auch über ein sechstes UND-Glied 90 an den Setzeingang S eines dritten Flipflops 91, dessen Ausgang Q mit einer z.B. grünen Signallampe 92 verbunden ist. In jeder Signallampenschaltung 48 ist ferner die Leitung 46 einerseits mit einem weiteren Eingang des sechsten UND-Glieds 90 und andererseits über ein zweites RC-Glied 93 mit dem Rück-setzeingang R des dritten Flipflops 91 verbunden.

Obgleich dies in Fig. 10 nur angedeutet ist, weist jeder Auswertekanal 64 je eine Signallampenschaltung 47 und 48 auf.

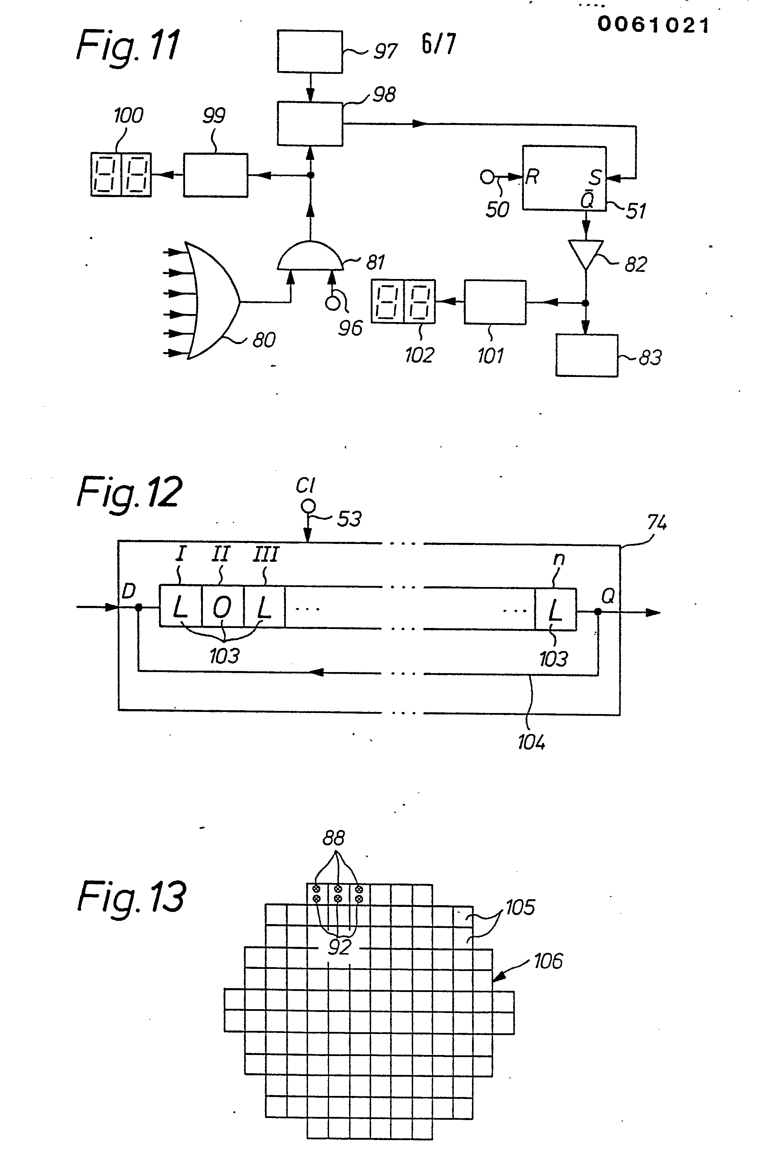

Mit dem ersten Wahlschalter 71 ist ein weiteres Schaltelement 94 gekuppelt, das, entgegengesetzt zu dem ersten Wahlschalter 71, während des Abgleichbetriebs am Nullpotential und während des Prüfbetriebs am positiven Potential $+U_B$ liegt. Das weitere Schaltelement 94 ist über eine Leitung 95 mit einem weiteren Eingang des siebenten UND-Glieds 81 verbunden. Von der Leitung 95 führt eine Zweigleitung 96 an Anschlüsse in den Schaltungen gemäß Fig. 11, 14 und 15.

In Fig. 11 ist zwischen den Ausgang des siebenten UND-Glieds 81 und den Setzeingang S des vierten Flipflops 51 ein durch einen dritten Wahlschalter 97 voreinstellbarer zweiter Vorwahlzähler 98 eingeschaltet. Der Ausgang des siebenten UND-Glieds 81 ist ferner mit einem Frühwarnzähler 99 mit einem zweistelligen Ziffernanzeigeelement 100 verbunden. An den Ausgang des Endverstärkers 82 ist ein Ausschußzähler 101 mit einem zweistelligen Ziffernanzeigeelement 102 angeschlossen.

Fig. 12 zeigt schematisch den Aufbau des elektronischen Speichers 74 als Schieberegister. Der Speicher 74 weist n Speicherstellen 103 auf, wobei die Zahl n gleich der Anzahl der Ausgänge I, II, III,..., n des Multiplexers 52 ist.

Während des Abgleichbetriebs werden die Ausgänge des Multiplexers 52 nacheinander angesteuert. Jede dieser Ansteuerungen hat das Aufblitzen der wenigstens einen angeschlossenen Blitzlampe zur Folge. Bei jedem derartigen Aufblitzen besteht die Möglichkeit, daß wenigstens ein Empfangselement 36 Reflexlicht aufnimmt. Das führt dazu, daß in der entsprechenden Speicherstelle 103 des Speichers 74 ein digitales L gespeichert wird. Fällt dagegen während eines Aufblitzens kein Reflexlicht auf ein bestimmtes Empfangselement 36, bleibt die zugehörige Speicherstelle 103 in ihrem digitalen Ausgangszustand O.

Während des Abgleichbetriebs findet für jeden Mustergegenstand 39 wenigstens ein Abgleichzyklus statt. Für mehr als einen derartigen Abgleichzyklus ist eine entsprechende Voreinstellung an dem zweiten Wahlschalter 57 (Fig. 7) vorzunehmen. In jedem Abgleichzyklus werden nacheinander sämtliche Speicherstellen 103 des Speichers 74 durchgetaktet und entweder in den Zustand L gesetzt oder in dem Ausgangszustand O belassen. In Fig. 12 deutet eine Leitung 104 schematisch an, daß der Inhalt des Speichers 74 bei mehreren Abgleichzyklen jeweils rückgeführt wird. Der am Ende des gesamten Abgleichbetriebs bestehende Speicherzustand der Speicher 74 bleibt nach Betätigung des ersten Wahlschalters 71 (Fig. 10) während des nachfolgenden Prüfbetriebs unverändert erhalten und dient in jedem Prüfzyklus dem Stelle nach Stelle erfolgenden Vergleich mit den aus den Prüflingen 3 gewonnenen Prüfsignalen.

Gemäß Fig. 13 sind jeweils eine der Signallampen 88 und der Signallampen 92 in einem Feld 105 einer Schautafel 106 angeordnet. Die Felder 105 sind in dem Beispiel der Fig.13 in der gleichen Weise wie die Empfangselemente 36 in Fig.3 angeordnet. Man hat auf diese Weise während des Abgleichbetriebs eine Kontrolle über die räumliche Lage der in den Mustergegenständen enthaltenen tolerierbaren Fehler. Für andere Anordnungen der Empfangselemente 36, etwa gemäß Fig. 4 oder 5, würde man die Schautafel entsprechend ausbilden.

In Fig. 10 führt während des Prüfbetriebs jedes Ausgangssignal des ersten ODER-Glieds 80 zur Betätigung des Auswerfers 83. Es gibt praktische Fälle, in denen auf diese Weise trotz vorhandener Fehler letztlich noch brauchbare Glasgegenstände ausgeworfen würden. Als Beispiele seien hier Störsignale aufgrund elektromagnetischer Einstreuungen trotz sorgfältiger Abschirmungsmaßnahmen oder Schwierigkeiten erwähnt, die in der Praxis beim Digitalisieren analoger Größen auftreten. In diesen Fällen kann eine Bewertung der Fehlersignale z.B. gemäß den Fig. 14 und 15 erfolgen.

In Fig. 3 sind die Empfangselemente 36 wechselweise mit A und B bezeichnet. Die Ausgänge der zu diesen Empfangselementen A gehörenden zweiten UND-Gliedern 69 sind in Fig.14 an das obere erste ODER-Glied 80 geführt, das zur Identifizierung mit A gekennzeichnet ist. In der gleichen Weise sind die zu den in Fig. 3 mit B gekennzeichneten Empfangselementen 36 gehörenden Auswertekanäle 64 an das in Fig.14 untere erste ODER-Glied 80 geführt, das zusätzlich mit B gekennzeichnet ist. Die Ausgänge dieser beiden ersten ODER-Glieder 80 in Fig. 14 sind einerseits über ein viertes ODER-Glied 107 mit einem Ein-gang eines achten UND-Glieds 108 und andererseits jeweils mit einem Eingang des siebenten UND-Glieds 81 verbunden. An einen weiteren Eingang des achten UND-Glieds 108 führt die Zweigleitung 96 aus Fig. 10. Der Ausgang des achten UND-Glieds 108 führt in den schon in Fig. 11 erwähnten Frühwarnzähler 99.

In dem Fall der Fig. 14 wird also nur dann der Auswerfer 83 betätigt, wenn an den Ausgängen der ersten ODER-Glieder 80 (A) und 80 (B) gleichzeitig ein Fehlersignal auftritt.

Andere Bewertungsmöglichkeiten der Fehlersignale bietet die Schaltung gemäß Fig. 15, in der voll ausgezogen eine erste Möglichkeit und gestrichelt zusätzliche weitere Möglichkeiten eingetragen sind.

Voll ausgezogen sind in Fig. 15 zunächst vier erste ODER-Glieder 80 in zwei Paaren, deren Ausgänge zunächst sämtlich an Eingänge des vierten ODER-Glieds 107 herangeführt sind. Die Ausgänge jedes Paares der ersten ODER-Glieder 80 sind ferner jeweils an Eingänge eines zugehörigen siebenten UND-Glieds 81 geführt, dessen Ausgang jeweils an einen Eingang eines gemeinsamen fünften ODER-Glieds 109 geht.

Mit dem in Fig. 15 obersten ersten ODER-Glied 80 können z.B. die zu denjenigen Auswertekanälen 64 gehörenden Empfangselemente 36 verbunden sein, die gemäß Fig. 4 auf dem äußersten Kreis mit C gekennzeichnet sind oder die in Fig. 5 in dem Kreissektor mit K bezeichnet sind. In ähnlicher Weise können weitere Kreise D, E, usw. oder weitere Kreissektoren L, M, usw. jeweils mit einem der weiteren ersten ODER-Glieder 80 in Fig. 15 verbunden sein.

Zusätzlich ist in Fig. 15 ein sechstes ODER-Glied 110 eingezeichnet, mit dessen Eingängen bestimmte Gruppen der Empfangselemente 36, z.B. die Summe der Empfangselemente 36 aus den Kreisen H und I in Fig. 4 oder die Empfangselemente 36 des zentralen kreisförmigen Feldes T in Fig. 5 verbunden sein können. Der Ausgang des sechsten ODER-Glieds 110 ist einerseits mit einem Eingang des fünften ODER-Glieds 109 und andererseits über eine Zweigleitung 111 wie die ersten ODER-Glieder 80 in Fig. 15 mit einem Eingang des vierten ODER-Glieds 107 verbunden.

Der Ausgang des fünften ODER-Glieds 109 führt über einen durch einen vierten Wahlschalter 112 voreinstellbaren dritten Vorwahlzähler 113 zu dem Setzeingang S des vierten Flipflops 51.

Eine andere logische Verknüpfung ergibt sich, wenn zusätzlich das in Fig. 15 gestrichelt eingezeichnete siebente UND-Glied 81 und entsprechende weitere siebente UND-Glieder verwendet werden. Dann führen die Ausgänge zweier benachbarter ersten ODER-Glieder 80 jeweils an Eingänge eines gemeinsamen siebenten UND-Glieds 81. An einen Eingang jedes der siebenten UND-Glieder 81 führt analog Fig. 11 die Zweigleitung 96 aus Fig. 10.

In Fig. 15 ist als weitere Variante gestrichelt ein zusätzliches erstes ODER-Glied 80 eingetragen, das z.B. mit den Empfangselementen eines der Kreise in Fig. 4 oder eines der Kreissektoren in Fig. 5 verbunden ist. Der Ausgang des gestrichelten ersten ODER-Glieds 80 führt zu einem Eingang des siebenten UND-Glieds 81, so daß in diesem Fall drei erste ODER-Glieder 80 bei gleichzeitig auftretenden Ausgangssignalen während des Prüfbetriebs zu einem Ausgangssignal an dem zugehörigen siebenten UND-Glied 81 führen.

Auf die in den Fig. 14 und 15 dargestellten Arten und auf sich für den Fachmann aus anderen logischen Verknüpfungen ergebende Arten lassen sich also die Fehlersignale aus den verschiedenen Auswertekanälen 64 in geeigneter Weise bewerten und letztlich zur Betätigung des Auswerfers 83 heranziehen.

Unsere Akten-Nr.: 954/150EP  Bad Gandersheim,26.Febr.1982
01 HERMANN HEYE

P A T E N T A N S P R Ü C H E

1. Verfahren zur Feststellung von nicht tolerierbaren Fehlern, z.B. Rissen und Blasen, von sich entlang einer Bahn bewegenden Glasgegenständen (Prüflingen), mit folgenden Schritten:

a) Ein Prüfling wird durch Blitzlampen beleuchtet,

b) von dem Prüfling reflektierte Lichtstrahlen werden von einem Empfänger aufgenommen und in elektrische Prüfsignale umgewandelt,

c) die elektrischen Prüfsignale werden mit aus wenigstens einem tolerierbare Fehler aufweisenden Mustergegenstand gewonnen elektrischen Mustersignalen verglichen, und die durch nicht tolerierbare Fehler hervorgerufenen elektrischen Prüfsignale werden als Fehlersignale festgestellt, und

d) die Fehlersignale werden zur Betätigung eines Auswerfers für nicht tolerierbare Fehler aufweisende Prüflinge benutzt,

dadurch gekennzeichnet, daß in einem Abgleichbetrieb wenigstens ein Mustergegenstand entlang der Bahn bewegt wird, wobei für jeden Mustergegenstand während eines Abgleichvorgangs in wenigstens einem Abgleichzyklus jeweils alle Blitzlampen nacheinander zu mehreren und/oder einzeln angesteuert werden, daß in dem Abgleichvorgang von dem betreffenden Mustergegenstand reflektierte Lichtstrahlen von einer Anzahl von jeweils mit einem elektronischen Speicher für die Mustersignale verbundenen Empfangselementen aufgenommen werden, und daß in einem auf den Abgleichbetrieb folgenden Prüfbetrieb für jeden Prüfling während eines Prüfvorgangs in wenigstens einem Prüfzyklus jeweils alle Blitzlampen

-2-

PK/Hu

in der gleichen Weise wie in jedem Abgleichzyklus nacheinander zu mehreren und/oder einzeln angesteuert werden, wobei die Prüfsignale durch die Empfangselemente erzeugt und mit dem die Mustersignale repräsentierenden Inhalt der Speicher zur Feststellung der Fehlersignale verglichen werden.

2. Vorrichtung zur Durchführung des Verfahrens nach Anspruch 1, dadurch gekennzeichnet, daß wenigstens eine Prüfzone jedes Mustergegenstands (39) und jedes Prüflings (3) jeweils durch eine Gruppe (18;19;20) der Blitzlampen (13;14,15;16,17,n) beleuchtbar ist, daß sämtliche Blitzlampen durch Ausgänge (I,II,III; ...,n) eines mit einer Taktfrequenz (C1) speisbaren Multiplexers (52) ansteuerbar sind, daß die Empfangselemente (36) oberhalb der Bewegungsbahn der Mustergegenstände (39) und Prüflinge (3) angeordnet sind, daß jedes Empfangselement (36) einerseits über ein erstes UND-Glied (68) mit einem Dateneingang (D) des zugehörigen elektronischen Speichers (74) und über einen Ausgang (Q) des Speichers (74) und einen ersten Inverter (75) mit einem ersten Eingang eines zweiten UND-Glieds (69) und andererseits mit einem zweiten Eingang des zweiten UND-Glieds (69) verbunden ist, daß ein dritter Eingang des zweiten UND-Glieds (69) mit der Taktfrequenz (C1) speisbar ist, daß ein weiterer Eingang des ersten UND-Glieds (68) über einen ersten Wahlschalter (71) für den Abgleichvorgang mit einem positiven Potential ($+U_B$) und für die Prüfvorgänge mit dem Nullpotential (0) verbindbar ist, und daß der Ausgang jedes zweiten UND-Glieds (69) mit einem Eingang wenigstens eines ersten ODER-Glieds (80) verbunden ist, dessen Ausgang zu dem Auswerfer (83) führt.

3. Vorrichtung nach Anspruch 2, dadurch gekennzeichnet, daß wenigstens eine Gruppe (18) der Blitzlampen oberhalb der Bewegungsbahn ringförmig, vorzugsweise kreisringförmig, in einer Reihe angeordnet ist.

4. Vorrichtung nach Anspruch 2, dadurch gekennzeichnet, daß wenigstens eine Gruppe (19;20) der Blitzlampen zwei auf gegenüberliegenden Seiten neben der Bewegungsbahn jeweils in einer Reihe angeordnete Halbgruppen (21,22;23,24) aufweist.

5. Vorrichtung nach Anspruch 4, dadurch gekennzeichnet, daß wenigstens eine (14;16) der Blitzlampen an den Enden jeder Halbgruppe (21,22;23,24) als Laserdiode ausgebildet ist.

6. Vorrichtung nach einem der Ansprüche 3 bis 5, dadurch gekennzeichnet, daß die Blitzlampen jeder Gruppe (18;19; 20) zumindest annähernd in einer gemeinsamen, rechtwinklig zu einer Längsachse der Mustergegenstände (39) und der Prüflinge (3) angeordneten Ebene vorgesehen sind.

7. Vorrichtung nach einem der Ansprüche 2 bis 6, dadurch gekennzeichnet, daß sämtliche Blitzlampen (13 bis 17, n) im Abstand voneinander angeordnet sind.

8. Vorrichtung nach einem der Ansprüche 2 bis 7, dadurch gekennzeichnet, daß alle Gruppen (18,19,20) der Blitzlampen entlang einer gemeinsamen, in einer Meßstrecke befindlichen, zu einer Längsachse der Mustergegenstände (39) und Prüflinge (3) parallelen Achse angeordnet sind.

9. Vorrichtung nach Anspruch 8, dadurch gekennzeichnet, daß die Mustergegenstände (39) und die Prüflinge (3) auf einem Transportelement (vgl.2) angeordnet sind, und daß vor der Meßstrecke zu beiden Seiten der Bewegungsbahn je eine Zentrierschiene (5,6) in einer Bewegungsrichtung (4) der Mustergegenstände (39) und der Prüflinge (3) im Abstand voneinander zur Ausrichtung der Mustergegenstände (39) und der Prüflinge (3) quer zu der Bewegungsrichtung (4) auf die Meßstrecke vorgesehen ist.

10. Vorrichtung nach Anspruch 9, dadurch gekennzeichnet, daß in der Bewegungsrichtung (4) nach der letzten Zentrierschiene (6) und vor der Meßstrecke noch eine mit einem oberen Bereich des Mustergegenstands (39) oder des Prüflings (3) zusammenwirkende Feinzentrierschiene (8) angeordnet ist.

11. Vorrichtung nach einem der Ansprüche 2 bis 10, dadurch gekennzeichnet, daß die Empfangselemente (36) zumindest annähernd in einer rechtwinklig zu der Längsachse der Mustergegenstände (39) und der Prüflinge (3) angeordneten Ebene vorgesehen sind.

12. Vorrichtung nach Anspruch 11, dadurch gekennzeichnet, daß die Empfangselemente (36) in einer Matrix aus Zeilen und Spalten angeordnet sind (Fig.3).

13. Vorrichtung nach Anspruch 11, dadurch gekennzeichnet, daß die Empfangselemente (36) in konzentrischen Kreisen (C bis I) angeordnet sind (Fig.4).

14. Vorrichtung nach Anspruch 11 oder 13, dadurch gekennzeichnet, daß die Empfangselemente (36) in Kreissektoren (K bis N,P) angeordnet sind (Fig.5).

15. Vorrichtung nach einem der Ansprüche 2 bis 14, dadurch gekennzeichnet, daß zwischen dem Mustergegenstand (39) oder dem Prüfling (3) und den Empfangselementen (36) eine Abbildungsoptik (34), vorzugsweise mit großer Öffnung und von kurzer Brennweite, angeordnet ist.

16. Vorrichtung nach einem der Ansprüche 8 bis 15, dadurch gekennzeichnet, daß am Anfang der Meßstrecke eine durch den zu messenden Mustergegenstand (39) oder Prüfling (3) zu tastende, vorzugsweise im Bereich einer vergleichsweise geringen Querdimension der Mustergegenstände (39) oder Prüflinge (3) angeordnete Startlichtschranke (10) vorgesehen ist, deren Empfänger (12) mit einem die Taktfrequenz (C1) liefernden Taktgenerator (45) verbunden ist.

17. Vorrichtung nach Anspruch 16, dadurch gekennzeichnet, daß der Empfänger (12) der Startlichtschranke (10) mit einem Setzeingang (S) eines ersten Flipflops (44) verbunden ist, dessen erster Ausgang (Q) mit dem Taktgenerator (45) und dessen zweiter Ausgang ($\bar{Q}$) mit einem auf die Anzahl der Ausgänge (I,II,III,..., n) des Multiplexers (52) eingestellten, durch die Taktfrequenz (C1) fortschaltbaren Zähler (49) verbunden ist, dessen Ausgang mit einem Rücksetzeingang (R) des ersten Flipflops (44) verbunden ist.

18. Vorrichtung nach einem der Ansprüche 2 bis 17, dadurch gekennzeichnet, daß jeder elektronische Speicher (74) als Schieberegister ausgebildet ist, dessen Stellenanzahl (n) der Anzahl (n) der Ausgänge (I,II,III,...,n) des Multiplexers (52) entspricht, und dessen Inhalt durch die Taktfrequenz (C1) verschiebbar ist.

19. Vorrichtung nach einem der Ansprüche 2 bis 18, dadurch gekennzeichnet, daß zwischen den Ausgang jedes ersten UND-Glieds (68) und den Dateneingang (D) des zugehörigen Speichers (74) ein zweites ODER-Glied (73) eingeschaltet ist, daß der Ausgang (Q) des Speichers (74) mit einem Eingang eines dritten UND-Glieds (76) verbunden ist, dessen Ausgang mit einem Eingang des zweiten ODER-Glieds (73) verbunden ist, und daß mit einem weiteren Eingang jedes dritten UND-Glieds (76) ein Ausgang ($\bar{Q}$) einer gemeinsamen monostabilen Kippschaltung (43) verbunden ist, deren Eingang mit einem Löschtastschalter (79) und deren anderer Ausgang (Q) mit einem Eingang eines zwischen dem Empfänger (12) der Startlichtschranke (10) und dem Setzeingang (S) des ersten Flipflops (44) eingeschalteten dritten ODER-Glieds (41) verbunden sind (Fig.10).

20. Vorrichtung nach einem der Ansprüche 17 bis 19, dadurch gekennzeichnet, daß der Ausgang des Zählers (49) außerdem einerseits mit dem Eingang eines durch einen zweiten Wahlschalter (57) voreinstellbaren ersten Vorwahlzählers (56) und andererseits mit einem Eingang eines vierten UND-Glieds (59) verbunden ist, dessen Ausgang mit einem weiteren Eingang des dritten ODER-Glieds (41) verbunden ist, und daß der Ausgang des ersten Vorwahlzählers (56) über einen zweiten Inverter (58) mit einem anderen Eingang des vierten UND-Glieds (59) verbunden ist (Fig.7).

21. Vorrichtung nach einem der Ansprüche 17 bis 20, dadurch gekennzeichnet, daß ein Punkt (84) zwischen jedem Empfangselement (36) und dem zugehörigen ersten UND-Glied (68) mit einem Eingang eines fünften UND-Glieds (86) verbunden ist, daß der erste Ausgang (Q) des ersten Flipflops (44) einerseits mit einem anderen Eingang jedes fünften UND-Glieds (86) und andererseits über ein erstes RC-Glied (89) mit dem Rücksetzeingang (R) eines zweiten Flipflops (87) verbunden ist, und daß der Ausgang des fünften UND-Glieds (86) mit dem Setzeingang (S) des zweiten Flipflops (87) und ein Ausgang (Q) des zweiten Flipflops (87) mit einer ersten Signallampe (88) verbunden sind (Fig.10).

22. Vorrichtung nach einem der Ansprüche 17 bis 21, dadurch gekennzeichnet, daß der Ausgang jedes zweiten UND-Glieds (69) mit einem Eingang eines sechsten UND-Glieds (90) verbunden ist, daß der erste Ausgang (Q) des ersten Flipflops (44) einerseits mit einem anderen Eingang jedes sechsten UND-Glieds (90) und andererseits über ein zweites RC-Glied (93) mit dem Rücksetzeingang (R) eines dritten Flipflops (91) verbunden ist, und daß der Ausgang des sechsten UND-Glieds (90) mit dem Setzeingang (S) des dritten Flipflops (91) und ein Ausgang (Q) des dritten Flipflops (91) mit einer zweiten Signallampe (92) verbunden sind (Fig.10).

23. Vorrichtung nach Anspruch 21 oder 22, dadurch gekennzeichnet, daß die ersten (88) und/oder die zweiten
(92) Signallampen in der gleichen Weise (vgl. Ansprüche 12 bis 14) wie die zugehörigen Empfangselemente
(36) angeordnet sind (Fig.13).

24. Vorrichtung nach einem der Ansprüche 2 bis 23, dadurch gekennzeichnet, daß mit dem ersten Wahlschalter
(71) ein weiteres Schaltelement (94) gekuppelt ist,
über das ein Eingang wenigstens eines siebenten
UND-Glieds (81) für den Abgleichvorgang mit dem Nullpotential (0) und für die Prüfvorgänge mit dem positiven Potential (+$U_B$) verbindbar ist, daß der Ausgang des wenigstens einen ersten ODER-Glieds (80)
jeweils mit einem weiteren Eingang wenigstens eines
siebenten UND-Glieds (81) verbunden ist, und daß der
Ausgang des wenigstens einen siebenten UND-Glieds (81)
zu dem Auswerfer (83) führt.

25. Vorrichtung nach Anspruch 24, dadurch gekennzeichnet,
daß der Ausgang des siebenten UND-Glieds (81) mit dem
Setzeingang (S) eines vierten Flipflops (51) verbunden
ist, dessen Rücksetzeingang (R) mit dem zweiten Ausgang ($\bar{Q}$) des ersten Flipflops (44) und dessen Ausgang (Q) mit dem Auswerfer (83) verbunden sind (Fig.
10).

26. Vorrichtung nach Anspruch 25, dadurch gekennzeichnet,
daß zwischen den Ausgang des siebenten UND-Glieds
(81) und den Setzeingang (S) des vierten Flipflops
(51) ein durch einen dritten Wahlschalter (97) voreinstellbarer zweiter Vorwahlzähler (98) eingeschaltet ist (Fig.11).

27. Vorrichtung nach einem der Ansprüche 24 bis 26, dadurch gekennzeichnet, daß der Ausgang des siebenten UND-Glieds (81) mit einem Frühwarnzähler (99) verbunden ist (Fig.11).

28. Vorrichtung nach einem der Ansprüche 24 bis 26, dadurch gekennzeichnet, daß bei mehreren ersten ODER-Gliedern (80) deren Ausgang jeweils an einen Eingang eines gemeinsamen vierten ODER-Glieds (107) geführt ist, dessen Ausgang über ein achtes UND-Glied (108) mit einem Frühwarnzähler (99) verbunden ist, wobei ein weiterer Eingang des achten UND-Glieds (108) mit dem weiteren Schaltelement (94) verbunden ist (Fig.14,15).

29. Vorrichtung nach einem der Ansprüche 24 bis 28, dadurch gekennzeichnet, daß bei mehreren siebenten UND-Gliedern (81) deren Ausgang jeweils zu einem Eingang eines fünften ODER-Glieds (109) geführt ist, dessen Ausgang, gegebenenfalls über einen durch einen vierten Wahlschalter (112) voreinstellbaren dritten Vorwahlzähler (113), mit dem Setzeingang (S) des vierten Flipflops (51) verbunden ist (Fig.15).

30. Vorrichtung nach Anspruch 29, dadurch gekennzeichnet, daß wenigstens ein weiterer Eingang des fünften ODER-Glieds (109) mit dem, gegebenenfalls außerdem mit einem Eingang des vierten ODER-Glieds (107) verbundenen, Ausgang eines sechsten ODER-Glieds (110) verbunden ist, dessen Eingänge mit den Ausgängen der zweiten UND-Glieder (69) einer besonderen Gruppe (z.B. H,I in Fig. 4 oder T in Fig. 5) der Empfangselemente (36) verbunden sind (Fig.15).

31. Vorrichtung nach einem der Ansprüche 25 bis 30, dadurch gekennzeichnet, daß an eine Stelle zwischen dem vierten Flipflop (51) und dem Auswerfer (83) ein Ausschußzähler (101) angeschlossen ist (Fig.11,14).

Fig.1

0061021

Fig. 2

*Fig. 3*

*Fig. 4*

*Fig. 5*

## Fig.6

## Fig.9

## Fig.8

## Fig.7

Fig. 10

## Fig.11

## Fig.12

## Fig.13

Fig. 14

Fig. 15